# EUROPÄISCHE PATENTANMELDUNG

(11) **EP 3 525 137 A1**
(43) Veröffentlichungstag der Anmeldung: **14.08.2019**
(21) Anmeldenummer: 18156514.4
(22) Anmeldetag: 13.02.2018
(51) Int. Cl.: G06N 3/04, G06N 3/08, G05B 13/02

(54) **VORRICHTUNG UND VERFAHREN ZUM RECHNERGESTÜTZTEN STEUERN EINES TECHNISCHEN SYSTEMS**

(71) Anmelder: Siemens Aktiengesellschaft, 80333 München (DE)
(72) Erfinder: Grothmann, Ralph, 80796 München (DE); Vogl, Stefanie, 94357 Konzell (DE); Zimmermann, Hans-Georg, 82319 Starnberg/Percha (DE)

(57) **Zusammenfassung**

Die Erfindung betrifft eine Vorrichtung (100) und ein Verfahren zum rechnergestützten Steuern eines technischen Systems mittels eines Ensembles (200) aus Neuronalen Netzen. Das Ensemble aus mindestens zwei Neuronalen Netzen (N1, Nn) mit einer gemeinsame Ein- und Ausgabeeinheit (210, 220) wird derart trainiert, dass die Neuronalen Netze jeweils Ausgabedaten generieren, die eine Abweichung zu Sollausgabedaten reduzieren. Über die gemeinsame Ausgabeeinheit wird ein gemittelter Restfehler ausgegeben. Mittels des trainierten Ensembles (200) aus Neuronalen Netzen (N1, Nn) und Messdaten des technischen Systems werden Steuerdaten zum Steuern des technischen Systems generiert und ausgegeben.

## Beschreibung

Die vorliegende Erfindung betrifft eine Vorrichtung und ein Verfahren zum rechnergestützten Steuern eines technischen Systems mittels eines Ensembles aus Neuronalen Netzen.

Für Steuerungen von technischen Systemen mit automatisierten Entscheidungsprozessen oder Vorhersageberechnungen werden zunehmend Neuronale Netze als Grundlage verwendet. Beispielsweise werden vorwärtsgerichtete Neuronale Netze, oder auch "Feedforward Neural Networks", genutzt, um mathematische Eingang-Ausgang-Modelle zur Zeitreihenprognose zu erstellen. Solche Vorhersagen werden beispielsweise für die Steuerung und Optimierung von industriellen Steuerungs- oder Automatisierungsanlagen, wie Wind- oder Gasturbinen oder intelligente Stromnetze verwendet.

Voraussetzung für die Verwendung der von Neuronalen Netzen errechneten Vorhersage-Modelle ist eine hohe Prognosegüte und Robustheit gegenüber den Eingabedaten. Das Training eines Neuronalen Netzes ist abhängig von den Trainings- bzw. Eingabedaten. Ein Vorhersage-Modell weist in der Regel einen nicht vernachlässigbaren Restfehler gegenüber vorgegebenen Ziel-Ausgabedaten auf, d.h. eine verbleibende Abweichung zwischen Ausgabedaten des Neuronalen Netzes und vorgegeben Ziel-Ausgabedaten. Für die Anwendung des trainierten Neuronalen Netzes zum Steuern eines technischen Systems sind genaue Ausgabedaten mit geringen Unsicherheiten vorteilhaft.

Bei Standardverfahren, wie z.B. Linear Scaling oder Quantile Mapping, zur Fehlerkorrektur werden die Fehler in einem nachgelagerten Schritt vermindert.

Es ist Aufgabe der vorliegenden Erfindung, Ungenauigkeiten der Datenausgaben von Neuronalen Netzen zur Steuerung eines technischen Systems zu verringern und somit eine Vorhersagequalität der Neuronalen Netze zu verbessern.

Die Aufgabe wird durch eine Vorrichtung mit den Merkmalen des Patentanspruchs 1, durch ein Verfahren mit den Merkmalen des Patenanspruchs 7, durch ein Computerprogrammprodukt mit den Merkmalen des Patentanspruchs 13 sowie durch ein computerlesbares Speichermedium mit den Merkmalen des Patentanspruchs 14 gelöst.

Ein erster Aspekt der Erfindung betrifft eine Vorrichtung zum rechnergestützten Steuern eines technischen Systems anhand von Messdaten des technischen Systems, umfassend:
(a) ein Bereitstellungsmodul, das derart ausgebildet ist, ein Ensemble umfassend zwei Neuronale Netze mit einer gemeinsamen Ein- und Ausgabeeinheit, bereitzustellen, wobei die Neuronalen Netze eine erste und zweite Verarbeitungsschicht aus mehrlagigen Perzeptronen umfassen,
(b) ein Trainingsmodul, das derart ausgebildet ist, das Ensemble anhand vorgegebener Eingabe- und Sollausgabedaten als Trainingsdaten für das technische System zu trainieren, wobei
   - die vorgegebenen Eingabedaten über die gemeinsame Eingabeeinheit in die Neuronalen Netze des Ensembles eingegeben werden,
   - die jeweils erste Verarbeitungsschicht anhand von den Trainingsdaten darauf trainiert wird, erste Ausgabedaten als Annäherung an die Sollausgabedaten zu generieren und eine verbleibende Abweichung zwischen ersten Ausgabedaten und Sollausgabedaten als Restfehler an die zweite Verarbeitungsschicht auszugeben,
   - die jeweils zweite Verarbeitungsschicht darauf trainiert wird, zweite Ausgabedaten zur Reduzierung des Restfehlers der jeweils ersten Verarbeitungsschicht zu ermitteln und einen verbleibenden Restfehler auszugegeben, und
   - ein Mittelwert der verbleibenden Restfehler der Neuronalen Netze des Ensembles ermittelt und über die gemeinsame Ausgabeeinheit als gemittelter Restfehler ausgegeben wird, und
(c) eine Ausgabeschnittstelle, die derart ausgebildet ist,
Steuerdaten mit dem gemittelten Restfehler zum Steuern des technischen Systems auszugeben, wobei die Steuerdaten abhängig von Messdaten des technischen Systems und mittels des trainierten Ensembles aus Neuronalen Netzen generiert werden.

Ein weiterer Aspekt der Erfindung betrifft ein Verfahren zum rechnergestützten Steuern eines technischen Systems anhand von Messdaten des technischen Systems, mit den Verfahrensschritten:
(a) Bereitstellen eines Ensembles umfassend zwei Neuronale Netze mit einer gemeinsamen Ein- und Ausgabeeinheit, wobei die Neuronalen Netze jeweils eine erste und zweite Verarbeitungsschicht aus mehrlagigen Perzeptronen umfassen,
(b) Trainieren des Ensembles anhand vorgegebener Eingabe- und Sollausgabedaten als Trainingsdaten für das technische System, wobei
   - die vorgegebenen Eingabedaten über die gemeinsame Eingabeeinheit in die Neuronalen Netze des Ensembles eingegeben werden,
   - die jeweils erste Verarbeitungsschicht anhand von den Trainingsdaten darauf trainiert wird, erste Ausgabedaten als Annäherung an die Sollausgabedaten zu generieren und eine verbleibende Abweichung zwischen ersten Ausgabedaten und Sollausgabedaten als Restfehler an die zweite Verarbeitungsschicht auszugeben,
   - die jeweils zweite Verarbeitungsschicht darauf trainiert wird, zweite Ausgabedaten zur Reduzierung des Restfehlers der jeweils ersten Verarbeitungsschicht zu ermitteln und einen verbleibenden Restfehler auszugegeben, und
   - ein Mittelwert der verbleibenden Restfehler der Neuronalen Netze des Ensembles ermittelt und über die gemeinsame Ausgabeeinheit als gemittelter Restfehler ausgegeben wird, und
(c) Ausgeben von Steuerdaten mit dem gemittelten Restfehler zum Steuern des technischen Systems, wobei die Steuerdaten abhängig von Messdaten des technischen Systems und mittels des trainierten Ensembles aus Neuronalen Netzen generiert werden.

Ein Vorteil der Erfindung ist insbesondere darin zu sehen, dass die Generierung der Ausgabedaten und die Fehlerkorrektur miteinander koppelbar sind und vorzugsweise in einem integrierten Trainingsschritt an das vorliegende Prognose- oder Lernproblem eines technischen Systems angepasst werden können, so dass Steuerdaten aufgrund des gemittelten Restfehlers genauer ausgegeben werden können.

Ein technisches System kann beispielsweise ein technisches Gerät, ein Feldgerät, einen Sensor, ein System aus mindestens einem Sensor, eine industrielle Automatisierungsanlage, ein Stromnetz, eine Produktionsanlage, ein Kraftwerk, ein Netz aus Kraftwerken, oder ein Internet-der-Dinge-Netzwerk umfassen. Dabei können insbesondere Messdaten des technischen Systems generiert und aufgenommen werden. Messdaten können insbesondere Messwerte physikalischer Größen oder Zustandsdaten des technischen Systems oder Betriebsdaten sein.

Trainingsdaten, insbesondere Eingabe- und Sollausgabedaten, für das technische System können vorzugsweise ähnlich den tatsächlich gemessenen Messdaten selektiert werden. Beispielsweise sind Trainingsdaten vorher aufgenommene Messwerte oder Simulations-/Modelldaten des technischen Systems.

Es wird ein Ensemble aus mindestens zwei künstlichen Neuronalen Netzen, die vorzugsweise vorwärtsgerichtet sind, trainiert bzw. konfiguriert. Die Neuronalen Netze umfassen mindestens zwei Verarbeitungsschichten aus mehrlagigen Perzeptronen. Ein mehrlagiges Perzeptron kann mindestens ein künstliches Neuron mit anpassbaren Gewichtungen und einem Schwellwert umfassen.

Vorzugsweise kann ein überwachter Lernprozess zum Trainieren des Ensembles verwendet werden. Mittels des Trainingsmoduls kann das Ensemble aus Neuronalen Netzen darauf trainiert werden, Ausgabedaten zu generieren, die vorgegebene SollAusgabedaten annähern. In anderen Worten, die Neuronalen Netze können, z.B. durch Ermittlung oder Optimierung von Gewichtungen von Verbindungen zwischen der Neuronen der Perzeptronen, dazu eingerichtet werden, die Sollausgabedaten zu reproduzieren. Das Training kann insbesondere mit Standardverfahren für überwachtes Lernen durchgeführt werden.

Es kann insbesondere die zweite Verarbeitungsschicht darauf trainiert werden, den Restfehler aus der vorhergehenden Verarbeitungsschicht zu reduzieren, bzw. zu minimieren, und einen verbleibenden Restfehler auszugeben. Dabei kann der Restfehler der vorhergehenden Verarbeitungsschicht reduziert werden. Bei mehr als zwei Verarbeitungsschichten, d.h. mit verdeckten Verarbeitungsschichten, kann der Restfehler an die folgende Schicht ausgegeben werden. Dort können Ausgabedaten ermittelt werden, die den Restfehler wiederum reduzieren. Damit kann in der Regel eine immer bessere Annäherung an die Sollausgabedaten, bei simultaner Reduzierung des Restfehlers, erreicht werden.

Die jeweilige letzte Verarbeitungsschicht der Neuronalen Netze des Ensembles gibt einen verbleibenden Restfehler aus, woraus ein gemittelter Restfehler der Neuronalen Netze des Ensembles ermittelt werden kann. Dieser gemittelte Restfehler kann als Maß für eine Ungenauigkeit der Ausgabedaten aufgefasst werden. Durch die Mittelung der Restfehler der Neuronalen Netze können insbesondere statistische Schwankungen effektiv ausgeglichen werden.

Der Mittelwert kann insbesondere ein arithmetische Mittel sein, so dass der gemittelte Restfehler um den Faktor 1/n oder 1/√n kleiner als der verbleibende Restfehler eines Neuronalen Netzes des Ensembles ist, wenn die einzelnen Neuronalen Netze nicht korrelierte Fehler aufweisen, wobei n die Anzahl der Neuronalen Netze ist.

Das trainierte Ensemble aus Neuronalen Netzen kann dazu genutzt werden, abhängig von Messdaten eines technischen Systems, Steuerdaten zu generieren. Es kann mittels des Ensembles eine Vorhersage beispielsweise über einen Zustand des technischen Systems gemacht und daraus genauer bestimmte Steuerdaten ausgegeben werden. Die Steuerdaten können Vorhersagedaten des trainierten Ensembles basierend auf eingegebenen Messdaten des technischen Systems sein. Durch den gemittelten Restfehler kann in der Regel die Genauigkeit der Steuerdaten abgebildet werden.

Mit dem Verfahren kann vorzugsweise eine Analyse von Messdaten zum Ausgeben von Steuerdaten mit einer hohen Vorhersagegenauigkeit mittels des trainierten Ensembles aus Neuronalen Netzen durchgeführt werden.
Weitere Vorteile des Verfahrens entsprechen den Vorteilen der erfindungsgemäßen Vorrichtung.

Die erfindungsgemäße Vorrichtung und das erfindungsgemäße Verfahren können beispielsweise mit Hilfe von einem oder mehreren Prozessoren, anwendungsspezifischen integrierten Schaltungen (ASIC), digitalen Signalprozessoren (DSP) und/oder sogenannten "Field Programmable Gate Arrays" (FPGA) ausgeführt bzw. implementiert werden.

Ein weiterer Aspekt der Erfindung betrifft ein Computerprogrammprodukt, das direkt in einen programmierbaren Computer oder Prozessor ladbar ist, umfassend Programmcodeteile, die dazu geeignet sind, die Schritte des Verfahrens durchzuführen und ein computerlesbares Speichermedium.

In den abhängigen Ansprüchen sind vorteilhafte Ausführungsformen und Weiterbildungen der Erfindung angegeben.

Gemäß einer vorteilhaften Ausführungsform der Vorrichtung können die Trainingsdaten und/oder Messdaten des technischen Systems Zeitreihendaten umfassen.

Eine Zeitreihe von Messdaten kann eine zeitliche Abfolge von Datenpunkten eines technischen Systems umfassen. Beispielsweise geben Zeitreihendaten Zustände oder Betriebsdaten des technischen Systems zu bestimmten Zeitpunkten an. Mittels Zeitreihendaten als Trainingsdaten kann das Ensemble aus Neuronalen Netzen beispielsweise derart trainiert werden, dass eine zeitliche Vorhersage eines Zustands des technischen Systems gemacht werden kann.

Gemäß einer vorteilhaften Ausführungsform kann die Vorrichtung ein Steuermodul zum Steuern des technischen Systems mittels der Steuerdaten mit dem gemittelten Restfehler umfassen.

Das trainierte Ensemble aus Neuronalen Netzen kann vorzugsweise Steuerdaten liefern, mit denen ein technisches System gesteuert wird. Die Steuerdaten können mittels des trainierten Ensembles mit einer hohen Genauigkeit angegeben werden. Es kann beispielsweise eine Vorhersage über einen künftigen Zustand des technischen Systems generiert und mit dem gemittelten Restfehler als Genauigkeit angegeben werden. Beispielsweise kann mit der Vorrichtung eine industrielle Anlage abhängig von den Steuerdaten automatisch gesteuert werden.

Gemäß einer vorteilhaften Ausführungsform kann die Vorrichtung ein Anpassungsmodul umfassen, das derart ausgebildet ist, eine Anzahl der Verarbeitungsschichten aus mehrlagigen Perzeptronen eines Neuronalen Netzes abhängig von den Ausgabedaten der Verarbeitungsschichten dynamisch anzupassen.

Ein Neuronales Netz des Ensembles kann mindestens zwei Verarbeitungsschichten umfassen. Die Anzahl der Verarbeitungsschichten wird häufig auch als Tiefe oder Netzwerktiefe des Neuronalen Netzes bezeichnet. Abhängig davon wie viele Schritte die Annäherung an die Sollausgabedaten benötigt, um die Ausgabedaten der Verarbeitungsschichten an die Sollausgabedaten anzunähern, kann die Anzahl der Verarbeitungsschichten dynamisch angepasst werden. In anderen Worten, eine Qualität der Ausgabedaten der Verarbeitungsschichten, insbesondere wie genau sie mit den Sollausgabedaten übereinstimmen, kann durch die Anzahl der Verarbeitungsschichten angepasst werden. Dabei ist es vorteilhaft, dass das Ergebnis des innerhalb der einzelnen Verarbeitungsschichten verbesserten Lernprozesses durch direkten Vergleich von Ausgabedaten zu Sollausgabedaten abgelesen werden kann. Es kann die Netzwerktiefe dynamisch angepasst werden, was eine vereinfachte Konfiguration der gesamten Topologie des Ensembles ermöglicht.

Gemäß einer vorteilhaften Ausführungsform der Vorrichtung kann die gemeinsame Ausgabeeinheit des Ensembles mindestens eine zusätzliche Verarbeitungsschicht umfassen, die derart ausgebildet ist, einen gewichteten Mittelwert aus den Restfehlern der Neuronalen Netze zu ermitteln und als gewichteten, gemittelten Restfehler auszugeben.

Die zusätzliche Verarbeitungsschicht kann während der Trainingsphase des Ensembles eine Gewichtung der einzelnen Neuronalen Netze ermitteln. Mit dem gewichteten, gemittelten Restfehler als Unsicherheit können Steuerdaten mit hoher Genauigkeit angegeben werden.

Gemäß einer vorteilhaften Ausführungsform der Vorrichtung kann in einem der Neuronalen Netze die erste Verarbeitungsschicht mit der zweiten Verarbeitungsschicht gekoppelt sein und die Ausgabedaten der ersten Verarbeitungsschicht können als zusätzliche Information in die zweite Verarbeitungsschicht eingegeben werden.

Die Reduzierung des Restfehlers und somit Annäherung der Ausgabedaten an die Sollausgabedaten kann optimiert werden, indem die ersten Ausgabedaten einer ersten Verarbeitungsschicht an die darauffolgende zweite Verarbeitungsschicht übergeben werden. Es kann eine vorverarbeitete Information aus den einzelnen Verarbeitungsschichten in der jeweils nächsten Verarbeitungsschicht genutzt werden.

Gemäß einer vorteilhaften Ausführungsform des Verfahrens kann das technische System mittels der Steuerdaten und dem gemittelten Restfehler gesteuert werden.

Basierend auf Trainingsdaten kann ein Ensemble aus Neuronalen Netzen derart trainiert werden, gut bestimmte Steuerdaten auszugegeben. Dies ist insbesondere von Vorteil, wenn eine automatische Steuerung des technischen Systems anhand der generierten Steuerdaten erfolgt.

Gemäß einer vorteilhaften Ausführungsform des Verfahrens kann eine Anzahl der Verarbeitungsschichten aus mehrlagigen Perzeptronen eines Neuronalen Netzes abhängig von den Ausgabedaten der Verarbeitungsschichten dynamisch angepasst werden.

Abhängig vom Trainingsergebnis der Verarbeitungsschichten kann die Anzahl der Verarbeitungsschichten dynamisch angepasst und somit das Verfahren weiter optimiert werden.

Gemäß einer vorteilhaften Ausführungsform des Verfahrens kann mittels mindestens einer zusätzlichen Verarbeitungsschicht der gemeinsamen Ausgabeeinheit des Ensembles ein gewichteter Mittelwert aus den Restfehlern der Neuronalen Netze ermittelt und als gewichteter gemittelter Restfehler ausgegeben werden.

Gemäß einer vorteilhaften Ausführungsform des Verfahrens können in einem der Neuronalen Netze die Ausgabedaten der ersten Verarbeitungsschicht als zusätzliche Information in der zweiten Verarbeitungsschicht eingegeben werden.

Die Konfiguration der Neuronalen Netze des Ensembles kann optimiert werden, wenn zusätzliche Informationen für die Generierung der Ausgabedaten den Verarbeitungsschichten bereitgestellt werden. Es können die Gewichtungen der mehrlagigen Perzeptronen schneller eingestellt werden.

Gemäß einer vorteilhaften Ausführungsform des Verfahrens kann anhand einer Streuung der Restfehler der Neuronalen Netze des Ensembles eine Vorhersagequalität ermittelt werden.

Das Verfahren gibt den Mittelwert der Restfehler aus, insbesondere einen Fehler auf den Mittelwert der ermittelten Ausgabedaten. Eine statistische Streuung der jeweiligen Restfehler der Neuronalen Netze ist ein Maß für die Abweichung der einzelnen Restfehler vom Mittelwert. Es kann beispielsweise vorteilhaft sein, links- und rechtsseitige Abweichungen durch Semivarianzen zu ermitteln.

Ausführungsbeispiele der erfindungsgemäßen Vorrichtung und des Verfahrens sind in den Zeichnungen beispielhaft dargestellt und werden anhand der nachfolgenden Beschreibung näher erläutert. Es zeigen in schematischer Darstellung:
- Fig. 1: ein erstes Ausführungsbeispiel einer erfindungsgemäßen Vorrichtung zum rechnergestützten Steuern eines technischen Systems anhand von Messdaten des technischen Systems;
- Fig. 2: ein zweites Ausführungsbeispiel einer erfindungsgemäßenVorrichtung zum rechnergestützten Steuern eines technischen Systems anhand von Messdaten des technischen Systems;
- Fig. 3: ein Ablaufdiagramm eines erfindungsgemäßen Verfahrens zum rechnergestützten Steuern eines technischen Systems anhand von Messdaten des technischen Systems;
- Fig. 4: ein erstes Beispiel eines Ensembles aus Neuronalen Netzen mit gemeinsamer Ein- und Ausgabeeinheit; und
- Fig. 5: ein zweites Beispiel eines Ensembles aus Neuronalen Netzen mit gemeinsamer Ein- und Ausgabeeinheit.

Einander entsprechende Gegenstände sind in allen Figuren mit den gleichen Bezugszeichen versehen.

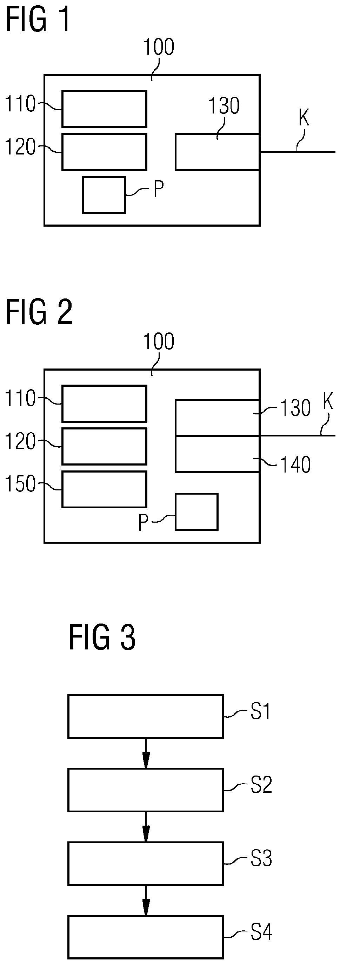

Figur 1 zeigt eine erfindungsgemäße Vorrichtung 100 zum rechnergestützten Steuern eines technischen Systems anhand von Messdaten des technischen Systems. Die Vorrichtung umfasst ein Bereitstellungsmodul 110, ein Trainingsmodul 120 und eine Ausgabeschnittstelle 130. Die Ausgabeschnittstelle ist vorzugsweise über eine Verbindung K, wie z.B. ein Kabel oder eine drahtlose Kommunikationseinheit, mit einem Netzwerk oder anderen Modulen des technischen Systems verbunden. Des Weiteren umfasst die Vorrichtung 100 einen Prozessor P, der derart eingerichtet ist, die Schritte des erfindungsgemäßen Verfahrens durchzuführen. Vorzugsweise sind alle Module und Komponenten der Vorrichtung 100 miteinander gekoppelt.

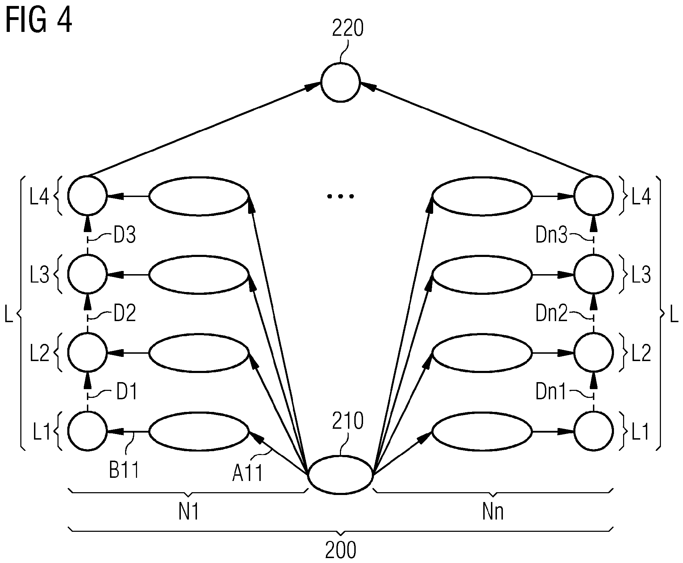

Die Vorrichtung 100 gibt Steuerdaten zum Steuern eines technischen Systems aus. Dazu stellt das Bereitstellungsmodul 110 ein Ensemble aus mindestens zwei Neuronalen Netzen, die vorzugsweise vorwärtsgerichtet sind, bereit. Die Neuronalen Netze umfassen eine gemeinsame Ein- und Ausgabeeinheit und bilden zusammen das Ensemble 200 aus Neuronalen Netzen, wie z.B. in Figur 4 dargestellt. Jedes der Neuronalen Netze umfasst jeweils mindestens eine erste und eine zweite Verarbeitungsschicht aus mehrlagigen Perzeptronen. Es ist denkbar, dass ein Neuronales Netz eine größere Anzahl an Verarbeitungsschichten umfasst, wie z.B. vier Verarbeitungsschichten wie in Figur 4 gezeigt.

Das Ensemble aus Neuronalen Netzen wird vom Trainingsmodul 120 trainiert. Dazu werden Eingabe- und Sollausgabedaten als Trainingsdaten vorgegeben. Vorzugsweise sind die Trainingsdaten dem technischen System oder einem dem technischen System ähnlichen System zugeordnet, z.B. Daten aus früheren Messungen oder Betriebsdaten des technischen Systems.

Das Training des Ensembles aus Neuronalen Netzen umfasst eine Anpassung oder Konfiguration der mehrlagigen Perzeptronen der Verarbeitungsschichten, so dass Ausgabedaten generiert werden, die Sollausgabedaten reproduzieren. Dies erfolgt über Transferfunktionen oder Aktivierungsfunktionen der künstlichen Neuronen in einzelnen Verarbeitungsschichten.

Das Trainingsmodul 120 ermittelt ein trainiertes Ensemble aus Neuronalen Netzen, mit welchem ein gemittelter Restfehler gegenüber den Sollausgabedaten ermittelt wird.

Das trainierte Ensemble wird der Ausgabeschnittstelle bereitgestellt, die damit Steuerdaten zum Steuern des technischen Systems generiert und ausgibt. Insbesondere werden die Steuerdaten abhängig von Messdaten des technischen Systems ermittelt und mit dem gemittelten Restfehler angegeben.

Beispielsweise ist die Vorrichtung in einer industriellen Automatisierungsanlage integriert. Anhand von Trainingsdaten, die z.B. eine Zeitreihe von Zuständen der Automatisierungsanlage darstellen, wird das Ensemble aus Neuronalen Netzen trainiert. Mittels des trainierten Ensembles und tatsächlichen Messdaten der Automatisierungsanlage kann eine Vorhersage über einen zeitlich nachfolgenden Zustand gemacht und daraus Steuerdaten zum Steuern der Automatisierungsanlage abgeleitet werden. Beispielsweise kann so mittels des trainierten Ensembles vorhergesagt werden, welchen Zustand die Automatisierungsanlage als nächstes annehmen wird und welche Steueraktion darauf folgen soll. Die Ungenauigkeit der Steuerdaten ist mit dem gemittelten Restfehler angegeben, so dass eine genauere Steuerung der Automatisierungsanlage möglich ist.

Es ist denkbar, dass ein Steuerbefehl abhängig von der Größe des gemittelten Restfehlers ausgegeben wird. Beispielsweise kann anhand eines Schwellwertes für den gemittelten Restfehler festgelegt werden, ob mittels der ausgegebenen Steuerdaten der Vorrichtung das technische System gesteuert werden soll.

Figur 2 zeigt eine zweites Ausführungsbeispiel der erfindungsgemäßen Vorrichtung 100 zum rechnergestützten Steuern eines technischen Systems anhand von Messdaten des technischen Systems. Die gezeigte Vorrichtung 100 umfasst neben dem Bereitstellungsmodul 110, dem Trainingsmodul 120, dem Prozessor P, und der Ausgabeschnittstelle 130, wie in Figur 1 gezeigt, ein Steuermodul 140 und ein Anpassungsmodul 150. Vorzugsweise sind alle Module in der Vorrichtung 100 miteinander gekoppelt. Es ist auch denkbar, dass die Module drahtlos miteinander verbunden sind.

Das Steuermodul 140 steuert das technische System mittels der von der Ausgabeschnittstelle 130 ausgegebenen Steuerdaten. Beispielsweise ist das Steuermodul mit einem Aktor über die Kommunikationsverbindung K verbunden.

Für die Generalisierungsphase, d.h. die Anwendung des trainierten Ensembles auf tatsächliche bzw. unbekannte Messdaten, wird das trainierte Ensemble beispielsweise gespeichert und in einem weiteren Schritt von der Ausgabeschnittstelle genutzt, um Steuerdaten zu generieren. Die Ausgabe der Steuerdaten des trainierten Ensembles wird mit dem zuvor anhand der Trainingsdaten bestimmten gemittelten Restfehler ergänzt. Die Steuerdaten werden anhand der eingegebenen Messdaten des technischen Systems und mittels des trainierten Ensembles vorhergesagt. Die Genauigkeit der Vorhersage wird mit dem gemittelten Restfehler angegeben, welcher in der Regel robust gegenüber statistischen Schwankungen ist. Folglich werden die Steuerdaten mit einer hohen Genauigkeit zum Steuern eines technischen Systems ausgegeben und vom Steuermodul zum Steuern genutzt.

Das Anpassungsmodul 150 führt eine dynamische Anpassung der Anzahl der Verarbeitungsschichten, d.h. der Tiefe eines Neuronalen Netzes, von mindestens einem der Neuronalen Netze des Ensembles durch, wenn die Reduzierung der Restfehlers beispielsweise weiter verbessert werden soll. Dazu kann das Anpassungsmodul 150 die Netzwerktiefe während des Trainings des Ensembles anpassen, um ein optimiertes Ensemble zu erhalten. Beispielsweise kann mit weiteren Verarbeitungsschichten die Reduzierung des Restfehlers verbessert werden. Das Anpassungsmodul 150 ermittelt vorzugsweise die Tiefe bzw. Anzahl der Verarbeitungsschichten, die für das jeweilige Lernproblem geeignet ist und passt die Anzahl dynamisch an, wobei das Lernproblem dabei abhängig vom technischen System ist. Das Anpassungsmodul 150 bestimmt die Anzahl der Verarbeitungsschichten vorzugsweise abhängig von den Ausgabedaten der jeweiligen bestehenden Verarbeitungsschichten, d.h. abhängig vom Trainingsergebnis der einzelnen Verarbeitungsschichten.

In Figur 3 wird ein Ablaufdiagramm eines Verfahrens zum rechnergestützten Steuern eines technischen Systems anhand von Messdaten des technischen Systems gezeigt.

Im ersten Schritt S1 des Verfahrens wird ein Ensemble aus mindestens zwei Neuronalen Netzen mit einer gemeinsamen Ein- und Ausgabeeinheit bereitgestellt, wobei die Neuronalen Netze jeweils mindestens zwei Verarbeitungsschichten aus mehrlagigen Perzeptronen umfassen.

Im Schritt S2 wird das bereitgestellte Ensemble aus Neuronalen Netzen trainiert. Für das Training des Ensembles werden vorgegebenen Eingabedaten als Trainingsdaten über die gemeinsame Eingabeeinheit des Ensembles in die Neuronalen Netze eingegeben. Die Eingabeeinheit kann insbesondere eine Eingabeschicht des Ensembles aus Neuronalen Netzen sein. Insbesondere werden die Eingabedaten in die jeweiligen Verarbeitungsschichten der Neuronalen Netze eingegeben, wie z.B. schematisch in Figur 4 gezeigt.

Trainingsdaten umfassen Eingabe- und Sollausgabedaten. Das Ensemble wird folglich darauf trainiert, d.h. derart konfiguriert bzw. Gewichtungen der Neuronen der Neuronalen Netze werden derart gesetzt, dass ausgehend von den Eingabedaten die Sollausgabedaten möglichst genau reproduziert werden. Insbesondere sind Trainingsdaten dem technischen System zugeordnet, d.h. beispielsweise Messdaten des technischen Systems oder eines ähnlichen technischen Systems oder Simulationsdaten aus einer Simulation des technischen Systems. Die Trainingsdaten und/oder die Messdaten eines technischen Systems umfassen beispielsweise Zeitreihendaten oder Betriebsdaten.

Jedes der Neuronalen Netze wird unabhängig von den anderen trainiert, d.h. die Ausgabedaten einer Verarbeitungsschicht eines Neuronalen Netzes werden nicht als Information in einer Verarbeitungsschicht eines anderen Neuronalen Netzes des Ensembles eingegeben. Folglich umfasst das Ensemble mindestens zwei Neuronale Netze, die sich ähnlich sind, und die nebeneinander geschaltet sind, so dass sie eine gemeinsame Ausgabe generieren. Vorzugsweise haben die Neuronalen Netze des Ensembles die gleiche Tiefe.

Die jeweils erste Verarbeitungsschicht der Neuronalen Netze wird anhand der Eingabedaten darauf trainiert, erste Ausgabedaten zu generieren, die die Sollausgabedaten annähern. Die Sollausgabedaten sind die Zielwerte der Annäherung. Die verbleibende Abweichung bei der Annäherung zwischen generierten ersten Ausgabedaten und Sollausgabedaten wird als Restfehler von der ersten Verarbeitungsschicht an die zweite, d.h. folgende, Verarbeitungsschicht ausgegeben.

Damit liegt eine erste Annäherung an die Sollausgabedaten vor. Die verbleibende Abweichung zwischen ersten Ausgabedaten und Sollausgabedaten, d.h. der Restfehler, wird in der folgenden Verarbeitungsschicht reduziert. Die zweite Verarbeitungsschicht wird derart konfiguriert, zweite Ausgabedaten zu generieren, die abhängig von den Eingabedaten den Restfehler annähern. In anderen Worten, die zweite Verarbeitungsschicht ermittelt zweite Ausgabedaten, die die Abweichung zwischen erste Ausgabedaten und den Sollausgabedaten, d.h. der Restfehler der ersten Verarbeitungsschicht, weiter minimiert. Der Zielwert für die Annäherung in der zweiten Verarbeitungsschicht ist der Restfehler der ersten Verarbeitungsschicht.

Der verbleibende Restfehler aus der Annäherung in der zweiten Verarbeitungsschicht, d.h. die Abweichung zwischen zweiten Ausgabedaten vom Restfehler der ersten Verarbeitungsschicht, wird als verbleibender Restfehler ausgegeben. Für Neuronale Netze mit mehr als zwei Verarbeitungsschichten wird in jeder weiteren Verarbeitungsschicht der verbleibende Restfehler weiter minimiert, wobei der verbleibende Restfehler aus der vorhergehenden Verarbeitungsschicht als Zielwert für die Reduzierung gesetzt wird. Die bestmögliche Annäherung an die Sollausgabedaten ist die Summe der ersten und zweiten Ausgabedaten bzw. die Summe der Ausgabedaten aller Verarbeitungsschichten, eines Neuronalen Netzes des Ensembles. Der verbleibende Restfehler der letzten Verarbeitungsschicht ist somit auch die Abweichung zwischen bestmöglich generierten Ausgabedaten und Sollausgabedaten eines der Neuronalen Netze des Ensembles.

Die Ausgabe eines Neuronalen Netzes des Ensembles sind folglich Ausgabedaten mit einem minimalen Restfehler, die ausgehend von den Eingabedaten bestmöglich die Sollausgabedaten reproduzieren. Jedes Neuronale Netz des Ensembles bestimmt während des Trainings Ausgabedaten und gibt einen verbleibenden Restfehler aus. Aus den verbleibenden Restfehlern der Neuronalen Netze wird ein Mittelwert ermittelt und als gemittelter Restfehler durch die gemeinsame Ausgabeeinheit ausgegeben. Das Ergebnis des Trainings ist folglich ein trainiertes, bzw. konfiguriertes, Ensemble aus fehlerkorrigierenden Neuronalen Netzen.

Das trainierte Ensemble wird in Schritt S3 genutzt, um Steuerdaten mit gemitteltem Restfehler zum Steuern eines technischen Systems auszugeben. Das technische System wird beispielsweise automatisch mittels der Vorrichtung, umfassend das trainierte Ensemble aus Neuronalen Netzen, gesteuert. Dabei werden Messdaten des technischen Systems in das trainierte Ensemble aus Neuronalen Netzen eingegeben und somit eine Prognose ermittelt und als Steuerdaten ausgegeben. Die Steuerdaten werden mit dem gemittelten Restfehler angegeben und liefern eine vorzugsweise eine präzise Steuervorschrift. In anderen Worten, die Vorhersagegenauigkeit des Ensembles aus Neuronalen Netzen ist in der Regel genauer als von einem Ensemblemitglied allein.

Mit den Steuerdaten wird im Schritt S4 das technische System gesteuert. Beispielsweise kann das Ensemble aus Neuronalen Netzen basierend auf entsprechenden Messdaten Steuerdaten generieren, die ein technisches System steuern oder konfigurieren oder weitere Prozesse starten oder beenden.

Figur 4 zeigt in schematischer Darstellung eine Netzwerk-Architektur eines Ensembles 200, umfassend mindestens zwei Neuronale Netze N1, Nn, einer Vorrichtung 100, wie in Figur 1 oder 2 dargestellt. Es sind zwei Neuronale Netze N1 und Nn gezeigt, die jeweils mindestens zwei Verarbeitungsschichten L umfassen, wobei hier als Beispiel jeweils vier Verarbeitungsschichten L1, L2, L3 und L4 gezeigt sind. Die Neuronalen Netze N1, Nn können beliebig viele Verarbeitungsschichten L, d.h. verdeckte Schichten, umfassen. Die Neuronalen Netze sind insbesondere vorwärtsgerichtet. Die Anzahl der Verarbeitungsschichten L kann dynamisch an das Lernproblem angepasst werden. Die Neuronalen Netze des Ensembles 200 umfassen eine gemeinsame Eingabeeinheit 210 und eine gemeinsame Ausgabeeinheit 220.

Beim Training des Ensembles werden Eingabedaten über die gemeinsame Eingabeeinheit 210 in eines der Neuronalen Netze N1 eingegeben. Die Eingabedaten werden in die jeweiligen Verarbeitungsschichten L der Neuronalen Netze eingegeben.

Die erste Verarbeitungsschicht L1 der Verarbeitungsschichten L eines Neuronalen Netzes N1 bis Nn des Ensembles 200 bestimmt erste Ausgabedaten als eine Näherung an vorgegebene Sollausgabedaten. Die jeweils erste Verarbeitungsschicht L1 der Neuronalen Netze N1 bis Nn generiert folglich erste Ausgabedaten, die gegenüber den Sollausgabedaten einen Restfehler aufweisen.

Das Ensemble aus Neuronalen Netzen lässt sich insbesondere in einer Matrixform beschreiben. Die Verarbeitungsschichten umfassen jeweils mehrlagige Perzeptronen. Beispielsweise kann die erste Verarbeitungsschicht L1 aus einer Eingabeschicht, einer ersten Transfermatrix A11, einer verdeckten Schicht mit geeigneter Aktivierungsfunktion oder Transferfunktion und einer zweiten Transfermatrix B11 bestehen. Die jeweils erste Verarbeitungsschicht L1 wird darauf trainiert bzw. ist derart eingerichtet, erste Ausgabedaten zu generieren, die Sollausgabedaten bestmöglich annähert.

Der Restfehler, d.h. die Abweichung zwischen den Ausgabedaten der ersten Verarbeitungsschicht L1 und den Sollausgabedaten, wird an die folgende, d.h. zweite, Verarbeitungsschicht L2 ausgegeben D1 bzw. Dn1. Die zweite Verarbeitungsschicht L2 generiert zweite Ausgabedaten, die den Restfehler reduzieren, insbesondere minimieren. In anderen Worten, die zweite Verarbeitungsschicht L2 wird abhängig von den Eingabedaten derart trainiert, zweite Ausgabedaten zu generieren, die zusammen mit den ersten Ausgabedaten der ersten Verarbeitungsschicht L1 die Sollausgabedaten besser annähern und somit den Restfehler gegenüber den Sollausgabedaten minimieren.

Jede weitere Verarbeitungsschicht L3, L4 führt eine weitere Verbesserung der Annäherung an die Sollausgabedaten abhängig von den Eingabedaten durch, wobei in jeder Verarbeitungsschicht der Restfehler der vorhergehenden Verarbeitungsschicht reduziert wird. Es wird von der dritten Verarbeitungsschicht L3 ein verbleibender Restfehler an die folgende Verarbeitungsschicht L4 ausgegeben, D2 für das erste Neuronale Netz N1 bzw. Dn2 für das letzte Neuronale Netz Nn, der dort mittels geeigneter Ausgabedaten angenähert wird. Der verbleibende Restfehler aus der dritten Verarbeitungsschicht wird an die vierte Verarbeitungsschicht ausgegeben D3, Dn3 und dort wiederum reduziert. Somit wird eine immer genauere Übereinstimmung von den Ausgabedaten, die das gesamte Neuronale Netz schrittweise ermittelt, und den vorgegebenen Sollausgabedaten erreicht. Es werden für die Annäherung und Fehlerreduzierung in jeder Verarbeitungsschicht lediglich die Abweichungen zwischen Ausgabedaten der vorhergehenden Verarbeitungsschicht und den Sollausgabedaten genutzt.

Die jeweils letzte Verarbeitungsschicht eines Neuronalen Netzes gibt einen verbleibenden Restfehler aus. Die Neuronalen Netze sind folglich fehlerkorrigierend. Aus den Restfehlern der Neuronalen Netze wird ein gemittelter Restfehler durch Mittelung gebildet und über die gemeinsame Ausgabeeinheit 220 ausgegeben. Die Ausgabeeinheit 220 ist insbesondere eine Ausgabeschicht des Ensembles aus Neuronalen Netzen. Die Neuronalen Netze des Ensembles 200 werden trainiert, Ausgabedaten an die Sollausgabedaten anzunähern. Die Ausgabe des Ensembles 200 ist der gemittelte Wert der Ausgabedaten und der gemittelte Restfehler. Eine statistische Streuung der einzelnen verbleibenden Restfehler der Neuronalen Netze gibt die Vorhersagequalität des trainierten Ensembles an.

Für die Bestimmung eines gewichteten gemittelten Restfehlers wird eine zusätzliche Verarbeitungsschicht vor die gemeinsame Ausgabeeinheit 220 eingerichtet.

Das trainierte Ensemble 200, d.h. das gemäß den Trainingsdaten eingerichtete Ensemble aus Neuronalen Netzen, wird in der Generalisierungsphase, d.h. bei der Anwendung des Ensembles auf Messdaten des technischen Systems, bereitgestellt, siehe Schritt S3 in Figur 3. Abhängig von den Messdaten werden mittels des trainierten Ensembles 200 Steuerdaten zum Steuern des technischen Systems generiert. Das trainierte Ensemble leitet anhand der Messdaten eine Prognose eines Zustands oder Werts des technischen Systems ab. Beispielsweise können Messdaten Bilddaten einer Bilderkennungseinrichtung sein. Mittels des trainierten Ensembles 200 kann beispielsweise automatisch ein Datensatz aus Bilddaten geeignet eingeteilt oder sortiert werden, und damit Steuerdaten für eine Maschine entsprechend generiert werden. Beispielsweise kann die Maschine eine Funktion oder Anwendung umfassen, die anhand automatischer Bilderkennung gesteuert wird.

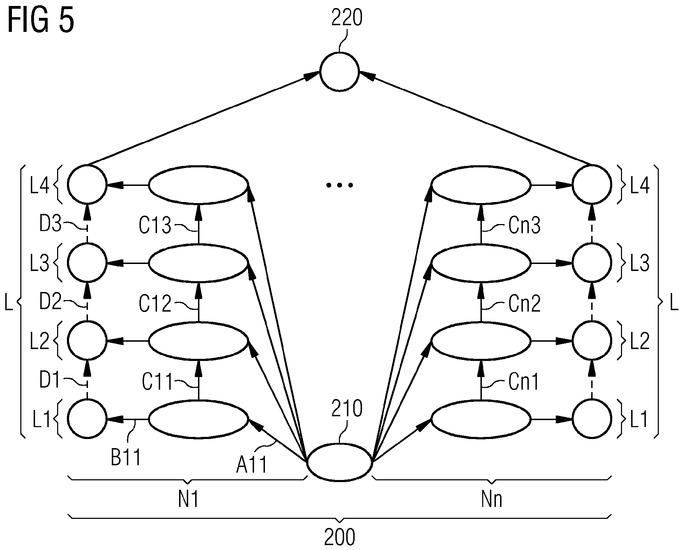

Figur 5 zeigt in schematischer Darstellung ein zweites Beispiel eines Ensembles 200 aus mindestens zwei Neuronalen Netzen N1 bis Nn mit einer gemeinsamen Ein- und Ausgabeeinheit 210, 220. Die einzelnen Verarbeitungsschichten L jeweils eines Neuronalen Netzes sind in diesem Beispiel derart verbunden, dass eine Verarbeitungsschicht Ausgabedaten an die folgende Verarbeitungsschicht als zusätzliche Information eingibt. So sind die Verarbeitungsschichten L1 bis L4 über die Transfermatrizen C11, C12, C13 bzw. Cn1, Cn2, Cn3 jeweils verknüpft. Die zusätzliche Information ist beispielsweise eine vorverarbeitete Eingabeinformation aus der jeweils vorhergehenden verdeckten Verarbeitungsschicht und unterstützt den Prozess der Annäherung an die Sollausgabedaten. Mit den zusätzlichen Verknüpfungen wird der Trainingsprozess des Ensembles 200 optimiert.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Vorrichtung zum rechnergestützten Steuern eines technischen Systems anhand von Messdaten des technischen Systems, umfassend:
(a) ein Bereitstellungsmodul (110), das derart ausgebildet ist, ein Ensemble (200) umfassend zwei Neuronale Netze (N1, Nn) mit einer gemeinsamen Ein- und Ausgabeeinheit (210, 220), bereitzustellen, wobei die Neuronalen Netze eine erste und zweite Verarbeitungsschicht (L1, L2) aus mehrlagigen Perzeptronen umfassen,
(b) ein Trainingsmodul (120), das derart ausgebildet ist, das Ensemble (200) anhand vorgegebener Eingabe- und Sollausgabedaten als Trainingsdaten für das technische System zu trainieren, wobei
- die vorgegebenen Eingabedaten über die gemeinsame Eingabeeinheit in die Neuronalen Netze (N1, Nn) des Ensembles (200) eingegeben werden,
- die jeweils erste Verarbeitungsschicht (L1) anhand von den Trainingsdaten darauf trainiert wird, erste Ausgabedaten als Annäherung an die Sollausgabedaten zu generieren und eine verbleibende Abweichung zwischen ersten Ausgabedaten und Sollausgabedaten als Restfehler an die zweite Verarbeitungsschicht auszugeben,
- die jeweils zweite Verarbeitungsschicht (L2) darauf trainiert wird, zweite Ausgabedaten zur Reduzierung des Restfehlers der jeweils ersten Verarbeitungsschicht zu ermitteln und einen verbleibenden Restfehler auszugegeben, und
- ein Mittelwert der verbleibenden Restfehler der Neuronalen Netze (N1, Nn) des Ensembles (200) ermittelt und über die gemeinsame Ausgabeeinheit (220) als gemittelter Restfehler ausgegeben wird, und
(c) eine Ausgabeschnittstelle (130), die derart ausgebildet ist,
Steuerdaten mit dem gemittelten Restfehler zum Steuern des technischen Systems auszugeben, wobei die Steuerdaten abhängig von Messdaten des technischen Systems und mittels des trainierten Ensembles (200) aus Neuronalen Netzen generiert werden.

2. Vorrichtung nach Anspruch 1, wobei die Trainingsdaten und/oder Messdaten des technischen Systems Zeitreihendaten umfassen.

3. Vorrichtung nach einem der vorhergehenden Ansprüche, umfassend ein Steuermodul (140) zum Steuern des technischen Systems mittels der Steuerdaten mit dem gemittelten Restfehler.

4. Vorrichtung nach einem der vorhergehenden Ansprüche, umfassend ein Anpassungsmodul (150), das derart ausgebildet ist, eine Anzahl der Verarbeitungsschichten (L) aus mehrlagigen Perzeptronen eines Neuronalen Netzes abhängig von den Ausgabedaten der Verarbeitungsschichten (L) dynamisch anzupassen.

5. Vorrichtung nach einem der vorhergehenden Ansprüche, wobei die gemeinsame Ausgabeeinheit (220) des Ensembles (200) mindestens eine zusätzliche Verarbeitungsschicht umfasst, die derart ausgebildet ist, einen gewichteten Mittelwert aus den Restfehlern der Neuronalen Netze zu ermitteln und als gewichteten, gemittelten Restfehler auszugeben.

6. Vorrichtung nach einem der vorhergehenden Ansprüche, wobei in einem der Neuronalen Netze (N1, Nn) die erste Verarbeitungsschicht (L1) mit der zweiten Verarbeitungsschicht (L2) gekoppelt ist und die Ausgabedaten der ersten Verarbeitungsschicht als zusätzliche Information in die zweite Verarbeitungsschicht (L2) eingegeben werden.

7. Verfahren zum rechnergestützten Steuern eines technischen Systems anhand von Messdaten des technischen Systems, mit den Verfahrensschritten:
(a) Bereitstellen (S1) eines Ensembles (200) umfassend zwei Neuronale Netze (201, 202) mit einer gemeinsamen Ein- und Ausgabeeinheit (210, 220), wobei die Neuronalen Netze (N1, Nn) jeweils eine erste und zweite Verarbeitungsschicht (L1, L2) aus mehrlagigen Perzeptronen umfassen,
(b) Trainieren (S2) des Ensembles anhand vorgegebener Eingabe- und Sollausgabedaten als Trainingsdaten für das technische System, wobei
- die vorgegebenen Eingabedaten über die gemeinsame Eingabeeinheit (210) in die Neuronalen Netze (N1, Nn) des Ensembles (200) eingegeben werden,
- die jeweils erste Verarbeitungsschicht (L1) anhand von den Trainingsdaten darauf trainiert wird, erste Ausgabedaten als Annäherung an die Sollausgabedaten zu generieren und eine verbleibende Abweichung zwischen ersten Ausgabedaten und Sollausgabedaten als Restfehler an die zweite Verarbeitungsschicht auszugeben,
- die jeweils zweite Verarbeitungsschicht (L2) darauf trainiert wird, zweite Ausgabedaten zur Reduzierung des Restfehlers der jeweils ersten Verarbeitungsschicht zu ermitteln und einen verbleibenden Restfehler auszugegeben, und
- ein Mittelwert der verbleibenden Restfehler der Neuronalen Netze (N1, Nn) des Ensembles (200) ermittelt und über die gemeinsame Ausgabeeinheit (220) als gemittelter Restfehler ausgegeben wird, und
(c) Ausgeben von Steuerdaten (S3) mit dem gemittelten Restfehler zum Steuern des technischen Systems, wobei die Steuerdaten abhängig von Messdaten des technischen Systems und mittels des trainierten Ensembles (200) aus Neuronalen Netzen generiert werden.

8. Verfahren nach Anspruch 7, wobei das technische System mittels der Steuerdaten und dem gemittelten Restfehler gesteuert wird (S4).

9. Verfahren nach einem der Ansprüche 7 oder 8, wobei eine Anzahl der Verarbeitungsschichten aus mehrlagigen Perzeptronen eines Neuronalen Netzes abhängig von den Ausgabedaten der Verarbeitungsschichten (L) dynamisch angepasst wird.

10. Verfahren nach einem der Ansprüche 7 bis 9, wobei mittels mindestens einer zusätzlichen Verarbeitungsschicht der gemeinsamen Ausgabeeinheit (220) des Ensembles ein gewichteter Mittelwert aus den Restfehlern der Neuronalen Netze ermittelt wird und als gewichteter gemittelter Restfehler ausgegeben wird.

11. Verfahren nach einem der Ansprüche 7 bis 10, wobei in einem der Neuronalen Netze die Ausgabedaten der ersten Verarbeitungsschicht (L1) als zusätzliche Information in der zweiten Verarbeitungsschicht (L2) eingegeben werden.

12. Verfahren nach einem der Ansprüche 7 bis 11, wobei anhand einer Streuung der Restfehler der Neuronalen Netze des Ensembles (200) eine Vorhersagequalität ermittelt wird.

13. Computerprogrammprodukt, das direkt in einen programmierbaren Computer ladbar ist, umfassend Programmcodeteile, die dazu geeignet sind, die Schritte des Verfahrens nach einem der Ansprüche 7 bis 12 durchzuführen.

14. Computerlesbares Speichermedium mit einem Computerprogrammprodukt nach Anspruch 13.
